Europäisches Patentamt

(19) European Patent Office

Office européen des brevets

(11) Publication number: **0 435 683 A1**

(12) # EUROPEAN PATENT APPLICATION

(21) Application number: 90314365.9

(22) Date of filing: 28.12.90

(51) Int. Cl.⁵: **A61K 37/02, A61K 37/18,** A61K 37/22, A61K 31/23, A23J 3/14, A23L 1/305, A61K 31/00

(30) Priority: 29.12.89 JP 342211/89

(43) Date of publication of application:
03.07.91 Bulletin 91/27

(84) Designated Contracting States:
DE FR GB

(71) Applicant: AJINOMOTO CO., INC.
5-8, Kyobashi 1-chome, Chuo-ku
Tokyo 104 (JP)

(72) Inventor: Sonaka, Ichiro, c/o Central Research
Lab.
Ajinomoto Co., Inc,, 1-1 Suzuki-cho,
Kawasaki-ku
Kawasaki-shi, Kanagawa-ken (JP)

Inventor: Kobayashi, Tetsuo, c/o Central
Research Lab.
Ajinomoto Co., Inc,, 1-1 Suzuki-cho,
Kawasaki-ku
Kawasaki-shi, Kanagawa-ken (JP)
Inventor: Futami, Yuko, c/o Central Research
Lab.
Ajinomoto Co., Inc,, 1-1 Suzuki-cho,
Kawasaki-ku
Kawasaki-shi, Kanagawa-ken (JP)
Inventor: Kitahara, Yoshiro, c/o Central
Research Lab.
Ajinomoto Co., Inc,, 1-1 Suzuki-cho,
Kawasaki-ku
Kawasaki-shi, Kanagawa-ken (JP)
Inventor: Sukegawa, Eiji, c/o Ajinomoto Co.,
Inc.
No. 1-1 Suzuki-cho, Kawasaki-ku
Kawasaki-shi, Kanagawa-ken (JP)

(74) Representative: Bond, Bentley George et al
Haseltine Lake & Co. 28 Southampton
Buildings Chancery Lane
London WC2A 1AT (GB)

(54) **Nutrient composition.**

(57) There is disclosed a nutrient composition comprising (i) potato protein and/or an enzymatic hydrolysate thereof and (ii) oil and/or fat. The composition can be used for the treatment of thrombosis.

EP 0 435 683 A1

## NUTRIENT COMPOSITION

The present invention relates to a nutrient composition and more particularly to a nutrient composition comprising potato protein or an enzymatic hydrolysate thereof.

As the nitrogen source of nutrient compositions which have been hitherto used for supply nutrients enterally or orally, animal proteins including casein and its enzymatic hydrolysates, and crystalline amino acids, have been used. While animal proteins and enzymatic hydrolysates thereof have an excellent nutritional value, they also have a hyperlipidemic effect (Caroll, K.K., Dietary Protein in relation to Plasma Cholesterol Levels and Arteriosclerosis, Nutr. Rev., 36, 1-5, 1978). Therefore, soybean protein as a vegetable protein having a relatively high nutritional value, or an enzymatic hydrolysate thereof, has been used as the nitrogen source of nutrient compositions which are intended to have the pharmaceutical effect of improving lipid metabolism. The disadvantages such as poor stability and poor solubility which arise when using crystalline amino acids as the nitrogen source of nutrient compositions can be solved by using an enzymatic hydrolysate of protein. Thus, nutritionally equivalent or better effectiveness has already been proposed (see Japanese Laid-Open Patent Application No. 64-20060). In the clinical field, importance is attached to the amount of lipids in plasma as a risk factor, from the viewpoint of the primary prevention of arteriosclerosis (see "The Lipid Research Clinics Coronary Primary Prevention Trial Results" : I, II, JAMA, 251, 351-374, 1984). On the other hand, in the case of thrombotic diseases such as cerebral infarction and myocardial infarction, the accentuation of platelet aggregation has been reported (Seiro Maruyama : "Cerebral Infarction and Blood Coagulation", Journal of the Medical Association, Japan, 88, 352-360, 1982), and, as drugs for preventing the relapse of these diseases, anti-platelet-aggregation drugs such as aspirin and ticlopidine have been used (Hideo Shio ; "Prevention of Relapse", Prog. Med., 8, 1109-1112, 1988).

Therefore, the present inventors have studied vegetable proteins that inhibit the increase of plasma lipids and made investigations of the activity of such proteins on the platelet aggregation in rats fed with a high cholesterol diet. As a result, it has been found that soybean protein enhances platelet aggregation induced by collagen while the anti-hyperlipidemic effect is noticeable. It thus appears that soybean protein could cause the formation of thrombus. Therefore, it is not expected that nutrient compositions comprising soybean protein or an enzymatic hydrolysate thereof would exert any pharmaceutical effect of preventing thrombotic disease.

An object of the present invention is to provide a nutrient composition having an anti-platelet-aggregation effect and an anti-hyperlipidemic effect and which is thus effective for prevention and treatment of thrombotic disease.

As a result of various investigations to achieve such an object, the present inventors have found that compositions comprising (i) potato protein and/or an enzymatic hydrolysates thereof and (ii) oil and/or fat have an anti-platelet-aggregation effect and an anti-hyperlipidemic effect.

Potato protein and its enzymatic hydrolysates are useful protein sources which have not only the same anti-hyperlipidemic effect as other vegetable proteins but also the effect of inhibiting platelet aggregation. By using potato protein or an enzymatic hydrolysate thereof in combination with oil or fat, an increase of plasma lipid and an increase of platelet aggregation can be significantly prevented.

The potato protein used in the present invention is preferably produced by removing starch from potato in a starch purification process, and then isolating, concentrating and drying the residue. The protein is mainly used as a feedstuff. By enzymatic hydrolysis of the potato protein, the digestibility, absorbability and nutritional value can be improved and, at the same time, the solubility, colour and texture can be improved (see Japanese Laid-Open Patent Application No. 64-20060). The hydrolysate may be more readily utilized as a nitrogen source of the nutrient compositions. In the nutrient compositions of the present invention, the potato protein or its enzymatic hydrolysate may be used singly or in combination. In order to satisfy the protein requirements of adults, the potato protein or its enzymatic hydrolysate is preferably present in an amount of 10 to 30 wt%.

As oil or fat, those containing large amounts of α-linolenic acid and/or linoleic acid as fatty acid components are preferred. It is desired that the oil or fat be present in an amount of 5 to 20 wt% in the nutrient composition, in order to satisfy the nutrient requirements for adults. As the oil or fat used in the present invention, there is preferably used soybean oil, safflower oil, perilla oil, corn oil, wheat germ oil, linseed oil, or evening primrose oil. The oil or fat may be used singly or in combination.

An example of a nutrient composition of the present invention is given in the following Table 1.

Table 1.    Amount of Nutrient Required and Nutrient
Composition of This Invention

|  | Amount Required*<br>Japan Female I 80 | RDA**<br>USA Female 76 | Nutrient<br>Composition of<br>This Invention |
|---|---|---|---|
| Energy (kcal) | 1250 | 1600 | 1250 |
| Protein (g) | 55 | 44 | 55 |
| Oils & fats (g) | (20%) |  | 20 |
| Sugar (g) | – | – | 213 |
| Vitamin A (µg ***) | 540 | 800 | 675 |
| Vitamin $B_1$ (mg) | 0.6 | 1 | 0.75 |
| Vitamin $B_2$ (mg) | 0.8 | 1.2 | 1.0 |
| Vitamin $B_6$ (mg) | – | 2.2 | 2.2 |
| Vitamin $B_{12}$ (µg) | – | 3 | 3 |
| Vitamin C (mg) | 50 | 60 | 63 |
| Vitamin D (µg***) | 2.5 | 5 | 3 |
| Vitamin E (mg***) | 7**** | 8 | 9 |
| Vitamin K (µg) | – | 70–140 | 70 |
| Niacin (mg) | 10 | 13 | 13 |
| Folic acid (mg) | – | 0.4 | 0.4 |
| Pantothenic acid (mg) | – | 4–7 | 4 |
| Biotin (µg) | – | 100–200 | 100 |
| Choline (mg) | – | – | 36 |
| Inositol (mg) | – | – | – |

|  | | Amount Required*<br>Japan Female I 80 | RDA**<br>USA Female 76 | Nutrient<br>Composition of<br>This Invention |
|---|---|---|---|---|
| Ca | (mg) | 600 | 800 | 750 |
| P | (mg) | 600 | 800 | 750 |
| Mg | (mg) | 300**** | 300 | 375 |
| Na | (mg) | – | 1100–3300 | 1100 |
| K | (mg) | – | 1875–5625 | 1875 |
| Cl | (mg) | – | 1700–5100 | 1700 |
| Fe | (mg) | 10 | 10 | 13 |
| Mn | (mg) | – | 2.5–5.0 | 2.5 |
| Cu | (mg) | 1.6–3.2 | 2.0–3.0 | 2 |
| Zn | (mg) | 15 | 15 | 19 |
| I | (μg) | 100– | 150 | 125 |
| F | (mg) | – | 1.5–4.0 | 1.5 |
| Cr | (mg) | – | 0.05–0.2 | 0.05 |
| Se | (mg) | – | 0.05–0.2 | 0.05 |
| Mo | (mg) | – | 0.15–0.5 | 0.15 |

\*    "Amount of nutrient required for Japanese" (1984), life activity intensity I: female older than 80 years old

\*\*    Recommended dietary allowances (1980): female older than 76 years old

\*\*\*    1 μg RE = 3.3 V.A. (IU)

1 μg cholecalciferol = 40 V.D. (IU)

1 mg $\alpha$-tocopherol = 1.5 V.E. (IU)

\*\*\*\*    Revised four times

The nutrient composition of the present invention can be administered orally or enterally in doses such as indicated in "Amount of Nutrient Required for Japanese" (1984), once or several times a day.

The nutrient composition of the present invention possesses both an excellent anti-platelet-aggregation activity and an excellent lipid reducing activity, and is thus useful for the prevention or treatment of arteriosclerosis or thrombotic disease. The nutrient composition of the present invention is thus suited for supplementing the nutrient requirements of patients suffering from myocardial infarction or cerebral apoplexy, and is especially useful for the prevention of the relapse of cerebral infarction.

The present invention will now be illustrated by the following Examples. In Example 2 reference is made to the drawings in which :

Fig. 1 illustrates an anti-hypercholesterolemic effect in that it shows the results obtained by measuring the total cholesterol level in blood plasma collected every week from the jugular vein of rats (n = 9 to 10) having free access to a high cholesterol diet for 8 weeks ; and

Fig. 2 illustrates an anti-platelet-aggregation effect in that it shows the results obtained by measuring platelet aggregation induced by collagen (20 µg/ml), using platelet rich plasma of rats (n = 6 to 8) having free access to a high cholesterol diet for 8 weeks.

Example 1

Male SD rats 5 weeks old were fed with a 0.5% cholesterol diet, and blood was collected from the jugular vein of the rats in Week 8. The plasma cholesterol level was determined by an enzymatic method. In Week 9, the platelet aggregation was determined with an aggligometer (NBS hematolaser 801) after the rats had fasted for 24 hours, using PRP (platelet rich plasma) prepared from arterial blood. The composition of the cholesterol diet was : 20% of protein, 4% of mineral mixture, 1% of vitamin mixture, 0.15% of choline chloride, 2% of cellulose, 5% of corn oil, 0.5% of cholesterol and 0.125% of sodium cholate, the balance to 100% being sucrose. As the protein, casein, soybean protein and potato protein were used, respectively. A cholesterol-free casein-containing composition was used as a control. The results are given in Table 2. With respect to the plasma cholesterol level, a significant increase was noted in the case of the compositions containing casein, as compared to the control. In the case of the compositions containing soybean protein and potato protein, there was no increase in the plasma cholesterol level.

## Table 2

|  | Number of Animals | Plasma Cholesterol Level (mg/100ml) |
|---|---|---|
| Casein | 9 | 138±23* |
| Soybean protein | 10 | 91±12 |
| Potato protein | 10 | 105±27 |
| Control | 9 | 94±14 |

The values in Table 2 are mean values ±SD. The asterick indicates a significant difference from the control group at $p < 0.05$.

The platelet aggregation in case of the composition containing the soybean protein was enhanced to about twice that of the control, in terms of the maximum aggregation, when collagen was used as an inducer. In contrast, in the case of the compositions containing the potato protein, there was no increase in platelet aggregation. This is shown in Table 3.

## Table 3

| | Number of Animals | Maximum Aggregation (%) (Collagen) | |
|---|---|---|---|
| | | 10μg/ml | 20μg/ml |
| Casein | 8 | 4±2 | 53±7 |
| Soybean protein | 9 | 8±9 | 60±6* |
| Potato protein | 9 | 7±6 | 48±15 |
| Control | 8 | 6±2 | 32±18 |

The values in Table 3 are mean values ±SD. The asterick indicates a significant difference from the control group at $p < 0.05$.

Example 2

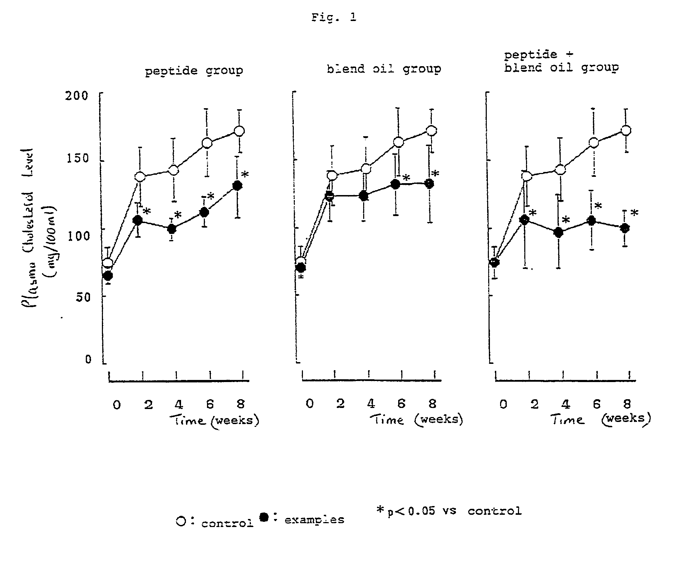

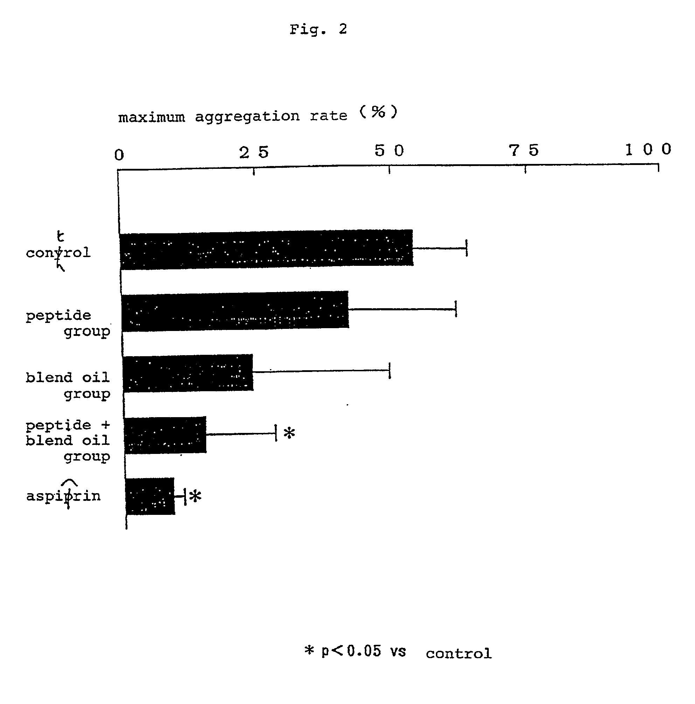

In a manner similar to Example 1, male SD rats 5 weeks old were fed with 0.5% cholesterol diet, and blood was collected from the jugular vein of the rats every other week to determine the plasma cholesterol level. In Week 8, the platelet aggregation was determined. The composition of the cholesterol diet was : 20% of protein, 4% of mineral mixture, 1% of vitamin mixture, 0.15% of choline chloride, 2% of cellulose, 5% of oil or fat, 0.5% of cholesterol and 0.125% of sodium cholate, the balance to 100% being sucrose. A "control group" of rats was fed with the foregoing diet, containing casein as the protein and safflower oil as the oil or fat ; a "peptide group" of rats was fed with the foregoing diet, containing an enzymatic hydrolysate of potato protein as the protein and safflower oil as the oil or fat ; a "blend oil group" of rats was fed with the foregoing diet, containing casein as the protein and a blend oil of wheat germ oil and perilla oil as the oil or fat ; a "peptide + blend oil group" of rats was fed with the foregoing diet, containing an enzymatic hydrolysate of potato protein as the protein and the blend oil as the oil or fat ; and an "aspirin group" of rats was fed with the same diet as the "control group" of rats and with 100 mg/kg/day of aspirin for 3 consecutive days before death. The results obtained are shown in Figs. 1 and 2. In the case of the "peptide group" and the "blend oil group", a tendency of an increase in the plasma cholesterol was noted but the increase was not significant as compared to the "control group". Furthermore, in the case of the "peptide + blend oil group", there was no increase in the plasma cholesterol level, and the synergistic effect of the peptide and the blend oil is clear (Fig. 1). When collagen was used as an inducer, the "peptide group" and the "blend oil group" showed a tendency of reducing platelet aggregation. In the case of the "peptide + blend oil group", however, the platelet aggregation was significantly reduced. This effect was equivalent to the "aspirin group" (Fig. 2).

As is evident from the foregoing, the nutrient composition of the present invention possesses an excellent anti-hyperlipidemic effect and the effect of preventing enhancement of platelet function in combination, and is useful for the prevention or treatment of arteriosclerosis or thrombotic disease.

## Claims

1. A nutrient composition comprising (i) potato protein and/or an enzymatic hydrolysate thereof and (ii) oil and/or fat.

2. A nutrient composition as claimed in claim 1, wherein said potato protein and/or its enzymatic hydrolysate is present in an amount of 10 to 30 wt%.

3. A nutrient composition as claimed in claim 1 or 2, wherein said oil or fat comprises α-linolenic acid and/or linoleic acid as its fatty acid component.

4. A nutrient composition as claimed in any of claims 1 to 3, wherein said oil or fat is present in an amount of 5 to 20 wt%.

5. A nutrient composition as claimed in any of claims 1 to 4, wherein said oil is a mixture of wheat germ oil and perilla oil.

6. A nutrient composition as claimed in any of claims 1 to 5, in a form which is suitable for oral or enteral application

7. For the treatment of thrombosis, a nutrient composition as claimed in any of claims 1 to 6.

Fig. 1

peptide group    blend oil group    peptide + blend oil group

O: control ●: examples    *p < 0.05 vs control

Fig. 2

maximum aggregation rate（％）

* p＜0.05 vs control

## European Patent Office

## EUROPEAN SEARCH REPORT

Application Number

| | DOCUMENTS CONSIDERED TO BE RELEVANT | | | EP 90314365.9 |
|---|---|---|---|---|
| Category | Citation of document with indication, where appropriate, of relevant passages | | Relevant to claim | CLASSIFICATION OF THE APPLICATION (Int. Cl.5) |
| X | J. SCHORMÜLLER "HANDBUCH DER LEBENSMITTELCHEMIE", vol. V, part 2 "OBST, GEMÜSE, KARTOFFELN, PILZE", 1968, Springer Verlag, Berlin, Heidelberg, New York pages 478-483 * Page 481, lines 15-32 * | | 1,3,6 | A 61 K 37/02 A 61 K 37/18 A 61 K 37/22 A 61 K 31/23 A 23 J 3/14 A 23 L 1/305 A 61 K 31/00 |
| X | EP - A2 - 0 265 099 (AJINOMOTO CO., INC.) * Claims 1,2,4,5; examples 7, 8; tables 1,3, page 1, lines 1-4 * | | 1-4,6 | |
| Y | * Claims 1,2,4,5; examples 7, 8; tables 1,3 * | | 7 | |
| Y | PATENT ABSTRACTS OF JAPAN, unexamined applications, C field, vol. 10, no. 90, April 8, 1986 THE PATENT OFFICE JAPANESE GOVERNMENT page 125 C 337 * Kokai-No. 60-222 418 * | | 7 | TECHNICAL FIELDS SEARCHED (Int. Cl.5) A 61 K 31/00 A 61 K 37/00 A 23 J 3/00 A 23 L 1/00 |
| X | AT - B - 386 950 (LEOPOLD & CO) * Claims 1,3; example 2; especially page 7, lines 29-30; page 4, lines 11-44 * | | 1,3,4 | |
| Y | * Claims 1,3; example 2 * | | 5 | |
| Y | P.H. LIST, L. HÖRHAMMER "HAGERS HANDBUCH DER PHARMA- ZEUTISCHEN PRAXIS", fourth edition, Springer-Verlag, Berlin, Heidelberg, New York, 1977, vol. 7, part B, page 209 | | 5 | |

The present search report has been drawn up for all claims

| Place of search | Date of completion of the search | Examiner |
|---|---|---|
| VIENNA | 04-03-1991 | MAZZUCCO |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

-2-

EP 90314365.9

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.5) |
| | * Chapter "Sojaöl" * | | |
| Y | P.H. LIST, L. HÖRHAMMER "HAGERS HANDBUCH DER PHARMA-ZEUTISCHEN PRAXIS", fourth edition, Springer-Verlag, Berlin, Heidelberg, New York, 1977, vol. 6, part A, page 528 * Chapter "Perilla" * | 5 | |
| Y | P.H. LIST, L. HÖRHAMMER "HAGERS HANDBUCH DER PHARMA-ZEUTISCHEN PRAXIS", fourth edition, Springer-Verlag, Berlin, Heidelberg, New York, 1979, vol. 6, part C, page 298 * Third and fourth passage * | 5 | |
| D,Y | NUTRITION REVIEWS, vol. 36, no. 1, January 1978, New York K.K. CARROLL "Dietary Protein in Relation to Plasma Cholesterol Levels and Atherosclerosis" pages 1-5 * Page 3, right column, lines 20-41; page 4, left column, lines 4-20, summary * | 1,3,4, 7 | TECHNICAL FIELDS SEARCHED (Int. Cl.5) |
| Y | GB - A - 2 139 889 (TERUMO KABUSHIKI KAISHA) * Abstract; claims 1,2,6 * | 1,3,4 7 | |
| Y | DIE NAHRUNG, vol. 26, no. 9, 1982, Berlin J. SIMOVA et al. "Changes in nutritional | 1,3,4 7 | |

The present search report has been drawn up for all claims

| Place of search | Date of completion of the search | Examiner |
|---|---|---|
| VIENNA | 04-03-1991 | MAZZUCCO |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| European Patent Office | EUROPEAN SEARCH REPORT | Application Number |
|---|---|---|

| | DOCUMENTS CONSIDERED TO BE RELEVANT | | EP 90314365.9 |
|---|---|---|---|

| Category | Citation of document with indication, where appropriate, of relevant passages | Relevant to claim | CLASSIFICATION OF THE APPLICATION (Int. Cl.5) |
|---|---|---|---|
| | value of potato proteins during the preparation of potato protein concentrate from tuber sap" pages 789-795 * Page 789, first passage; page 795; abstract * -- | | |
| A | EP - A2 - 0 271 963 (THE PROCTER & GAMBLE COMPANY) * Claims 1,5,6,; example 3; abstract * ---- | 1,3,4, 6,7 | |
| | | | TECHNICAL FIELDS SEARCHED (Int. Cl.5) |

The present search report has been drawn up for all claims

| Place of search | Date of completion of the search | Examiner |
|---|---|---|
| VIENNA | 04-03-1991 | MAZZUCCO |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document